# EUROPEAN PATENT APPLICATION

(11) **EP 1 182 593 A1**
(43) Date of publication of application: **27.02.2002**
(21) Application number: 00307227.9
(22) Date of filing: 22.08.2000
(51) Int. Cl.: G06F 17/60

(54) **Computer billing system**

(71) Applicant: Gill, Baldev Singh, London W1M 4AP (GB)
(72) Inventor: Gill, Baldev Singh, London W1M 4AP (GB)
(74) Representative: Loveless, Ian Mark

(57) **Abstract**

A system for monitoring chargeable use by a user of an information provision system has a database storing time allowance data. Users can request information in the form of advice from any one of a number of advisers located in the same country as the user, or in different countries. The time taken to prepare the advice is recorded by a local timer at each information provision sub-system (a local server). The time elapsed to prepare the advice is recorded in a database. Each user is charged in their own currency to purchase further time allocation. Mechanisms are included for prompting their user when their time allocation is too low for further advice to be given. The allows access to different types of advice including tax, legal and financial through a single unified system.

## Description

### FIELD OF THE INVENTION

The present invention relates to a computer billing system, in particular to a system for recording chargeable services on distributed computer networks, such as the Internet.

### BACKGROUND OF THE INVENTION

The Internet is, of course, very well known, including the various protocols TCP/IP and HTML which allow transmission and formatting of information on the World Wide Web. Other computer networks also run these protocols, or similar, and are termed IntraNets. These require no further explanation, being well known to the skilled person.

Computer networks such as the Internet or Intranets share in common a distributed nature by which we mean that different computer nodes on the network have processing capability to manipulate, store and distribute data. In particular, each computer can publish text and graphic data to others by HTML, e-mail or other methods.

The distributed nature of such computer networks provides great resilience and flexibility for communication with individuals around the world. We have appreciated, however, that this distributed nature presents certain problems to those wishing to use the technology within a business environment.

### SUMMARY OF THE INVENTION

We have appreciated the need to monitor information flow within a business application on a computer network. We have further appreciated the need to record such information flow in an effective and fair manner for charging customers to whom information is provided.

In a broad aspect, the invention provides a system for recording time elapsed for provision of information in a distributed computer system.

In particular, there is provided a method of monitoring chargeable use by a user of an information provision system having a plurality of distributed information provision subsystems connected by a computer network, comprising:
a) maintaining a customer database configured to store user identification data and user time allowance data representing the time allocation allowed by each user;
b) receiving a request message from a user at one of the information provision subsystems including a textual request and user identification data;
c) displaying the textual request to one or more responders associated with one of the information provision subsystems;
d) timing, using a local timer at the information provision subsystem at which the request was displayed, the time taken for the responder to prepare a response;
e) generating a response message including a textual response, user identification and a time elapsed message indicating the time taken to prepare the response;
f) forwarding the user identification and time elapsed message to the customer database; and
g) changing the time allowance data to decrement the time allocation for the user by the time taken to prepare the response represented by the time elapsed message.

The system of the present invention thus provides local timers at each relevant point in the distributed system to time the time taken to prepare a response to a question. The advantage of such an arrangement is to avoid the need to synchronise the whole system which, when implemented on the Internet, could be worldwide. The invention thus facilitates accurate and fair charging of system users, without requiring network synchronisation messages.

The preferred embodiment comprises means for receiving payment for use of the system in a variety of currencies, and means for allocating the user time allowance data based on a conversion factor from currency to time. This allows the system to be used easily across the Internet with a unified changing structure. The means for receiving payment and allocating time can be a secure area of a website.

The embodiment also includes means for monitoring the time allowance data and alerting a user if the time allocation indicated by that user falls below a given level. This aspect preferably comprises a pending message store for storing the response message, means for comparing the time taken to prepare the response, with the time allocation for the user from whom the request was received and, means for sending the textual response to the user if the time taken to prepare the response is less than the time allocation. These features are provided by analysis routines at each subsystem and operate by extracting the relevant data from te customer database. The system also includes a pending message store for storing the response message, means for comparing the time taken to prepare the response, with the time allocation for the user from whom the request was received and, means for sending the textual response to the user if the time taken to prepare the response is less than the time allocation.

The advantage provided by the system embodying the invention is that the charging for advice is unified across a distributed network. Accordingly, the preferred system also includes means for presenting a choice of information topics to each user and, means for routing a request message for display to a corresponding subset of the one or more responders, depending upon the topic selected. This allows a user to obtain advice on a variety of topics such as taxation, law, accounting all using the same monitoring system.

The preferred system allows responses to requests for advice to be made anonymously, and for that reason comprises means for intercepting a request message from a user including a textual request and user identification data; means for retrieving an anonymous user-ID corresponding to the user identification data; and means for forwarding the request message with the textual request and anonymous user-ID and means for retrieving the user identification data corresponding to the anonymous user-ID for inclusion in the response message. This ensures an adviser preparing a response does not know the identity of the user.

The invention is further defined in the claims to which reference is now directed.

### BRIEF DESCRIPTION OF THE FIGURES

An embodiment of the invention will now be described, by way of an example, only, and with reference to the accompanying figures, in which:
- Figs. 1,2 & 3:: are functional diagrams of the main components of a system embodying the invention;
- Fig. 3a:: shows the message flow in the system of Fig. 3;
- Fig. 4:: shows a user database in greater detail;
- Fig. 5:: is a flow diagram of the main actions of a system embodying the invention;
- Fig. 6:: is a logical diagram of system operation;
- Fig. 7 & 7a:: is an example program script for a timer;
- Fig. 8:: is an example screen seen by a user; and
- Fig. 9:: is an example request.

The system embodying the invention is particularly suited to allow customers to access professional advice, information or data from anywhere in the world and be billed on a minute-by-minute billing system via the Internet. The system software will ensure that a customers' personal details are not known by professional staff providing advice in the areas such as: tax, legal, payroll, accountancy and business services. The customer can access information from global sources since a central database is used to deduct and update advice minutes from the customers' account.

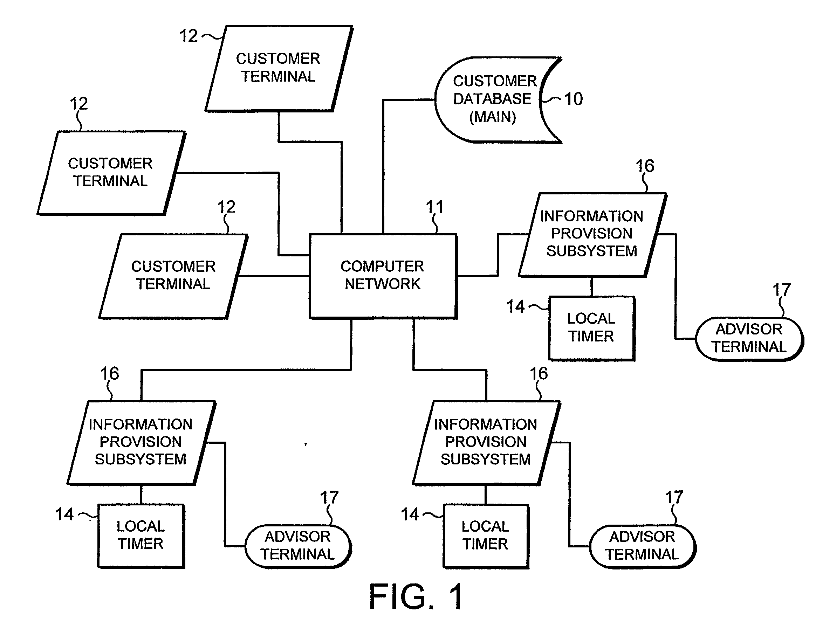

An overview of the key functional components is shown in Figures 1, 2 and 3. It is stressed, for the avoidance of doubt, that the connections shown are logical, not necessarily physical. A plurality of customer terminals 12 connect to a computer network 11 which in turn connects to a plurality of information provision subsystems 16. The customer terminals are preferably standard PCs running any standard Web browser and e-mail package. The computer network 11 is the Internet or an Intranet. These components require no further explanation and are well known to the skilled person.

The information provision system comprises a plurality of information provision subsystems 16 which may be distributed, for example, throughout Europe. These are server class computers providing a Web site displayable at each customer terminal 12. The customers thereby have a choice of sources of information; each separate information provision subsystem being located, for example, in separate European countries. Associated with each information provision subsystem 16 is a local timer 14 as well one or more adviser terminals 17. The subsystem 16 being a server means that the advisor terminals are also PC computers connected to the subsystems 16 by the Internet.

The users of the system and advisors providing the information are each associated with one information provisions subsystem 16. As an example, a French advisor operates with the French subsystem 16.

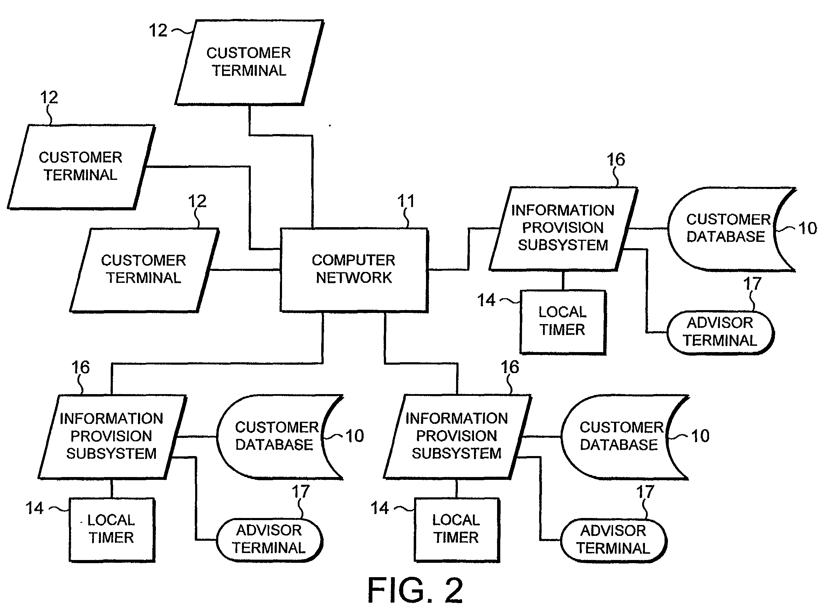

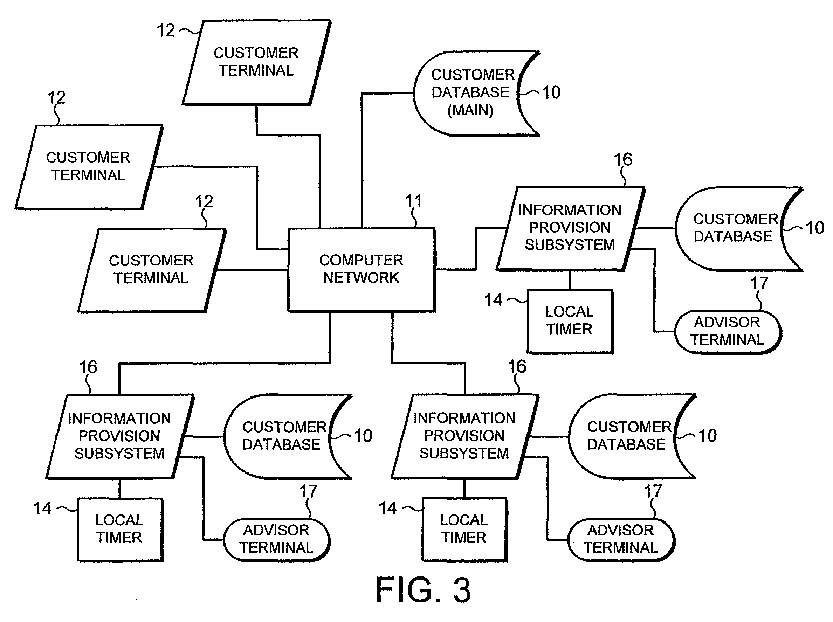

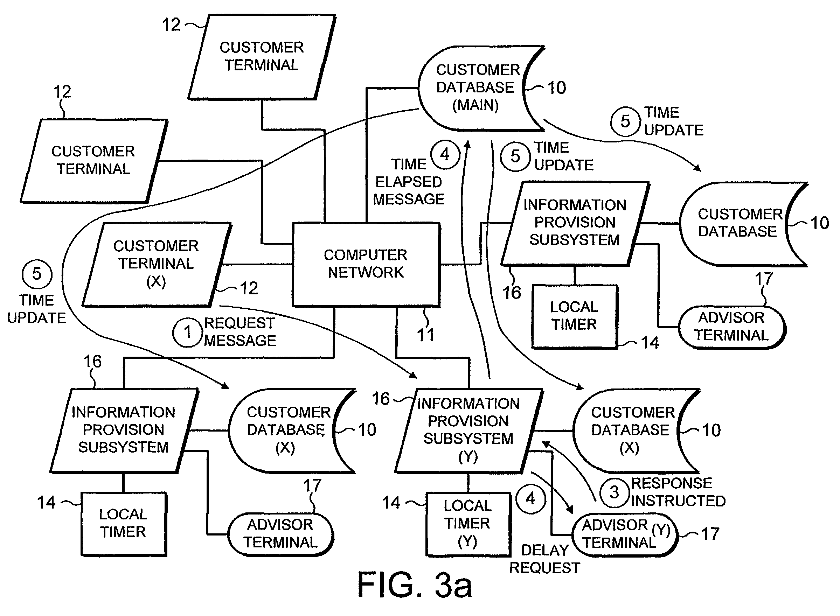

The system also includes a customer database 10 for storing bibliographic details of users as well as user - Ids and time allowance data indicating the amount of chargeable time each user has remaining to use the system. There are three alternative configurations of the database 10. First, as shown in Figure 1, there is a single central customer database 10. This stores customer information for all users of the system. An alternative configuration is shown in Figure 2, in which there are a plurality of customer database, each associated with one of the information provision subsystems 16. In this way, subsets of users are each grouped and associated with a particular database to store their bibliographic details and time allowance. The preferred arrangement is shown in Figure 3, and comprises both a main customer database 10 and a plurality of distributed customer databases 10. The advantage of this arrangement is that a customer may be physically located remote from the usual local sub-system by reference to the main database. Similarly, a user may seek information from a remote subsystem (e.g. a UK user can access information from a French advisor, and a UK user can also access advice from the UK when in France).

Each of the local distributed databases 10 are in real-time communication with the central database 10. However, the local database in each country is not in direct communication with another local database in a different country. The way a customer's account can be updated is:
a) If a customer uses advice from their own country, their local database is updated. This update is also communicated to the central database.
b) If a customer uses the services of an advisor from a country outside of their local country; then any services that are to be billed for this customer are first timed at the host country, he or she uses. The host country database then updates the central database. Once the central database is updated, the central database updates the customer's domestic country database, and hence the appropriate advice time is billed in the local currency of the customer.

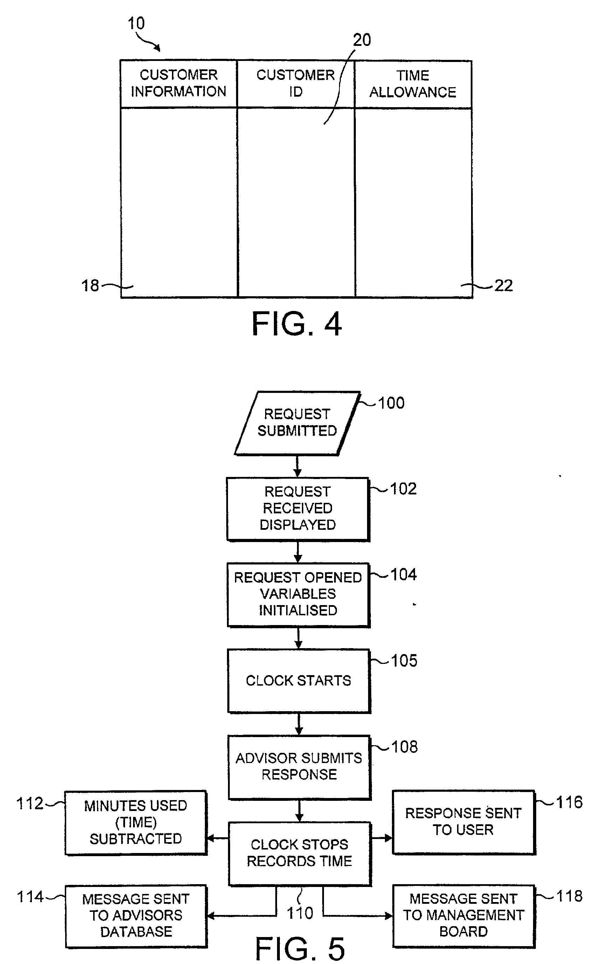

It is the time allowance that is key to the system as will now be described with reference to the example database shown in Figure 4.

The customer database 10 comprise customer information 18, such as name, address and e-mail address, a customer ID 20 for each user and a time allowance 22 for each user. To use the system, each user logs on from a PC customer terminal 12 to their local information provision subsystem 16 and pays for a certain number of minutes for advice information. The number of minutes paid for is stored in the customer database 10 with which the user is associated as time allowance data 22. This information is also posted to the main database 10.

The use of the system and decrementing of allowance time will now be described with reference to Figure 5. The first step 100 when using the system is for a request message to be submitted by a user, 100 in the form of an e-mail submitted to a particular category of advisors. The e-mail is displayed 102 to advisors at a given subsystem, or to a subset of advisors on a particular topic e.g. French tax law. The request e-mail is selected by one of the advisors and opened 104 at which stage local variables are initialised for time recordal. The local clock then starts 106. When the responder (in the form of an advisor) submits a response to 108, this causes the clock to stop 110 and the time is recorded. A time elapsed message 112 is sent to the customer database and the time allowance decremented with the number of minuted used. A response e-mail 116 is sent to the user and e-mail messages are also sent to a management board 118 and advisors database 114.

In the preferred embodiment of Figure 3, there is a main database for customer information and local databases. These are updated as follows, with reference to Figure 3a. First, customer X submits a request for information from an advisor based in country Y. Second, the request is displayed at information provision subsystem Y. An advisor Y prepares a response and this is timed by a local timer Y. Third, the response is instructed causing a response massage to be sent, fourth, including a time elapsed message sent to the main customer database. Fifth, the main customer database sends an update message to inform all local databases of the change in time for that customer.

The number of advice minutes used are thereby deducted from all databases. The billing of the customer X is done by his own local database X and subsystem X in local currency.

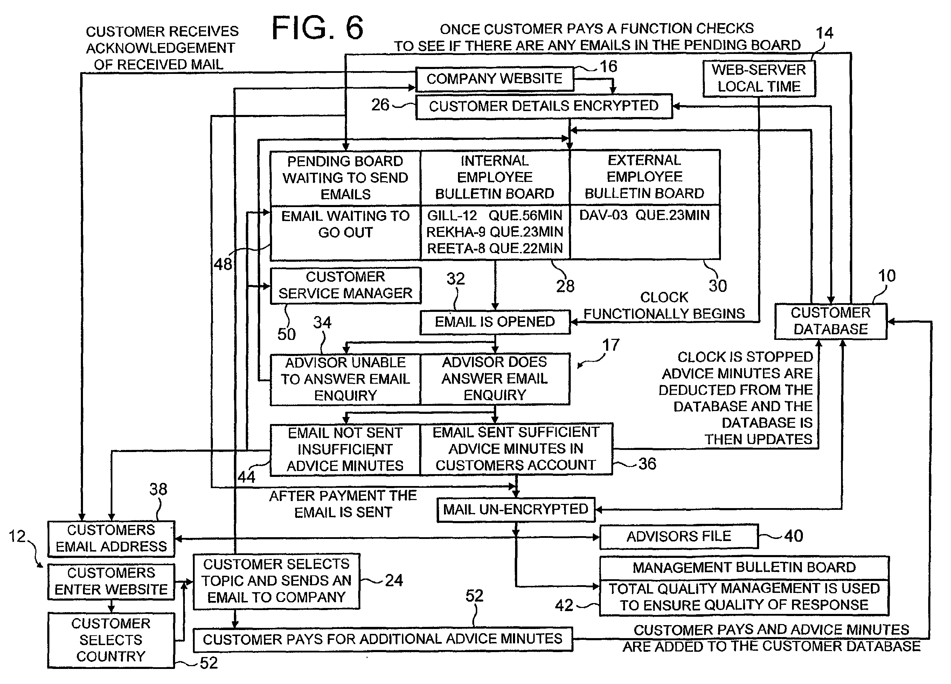

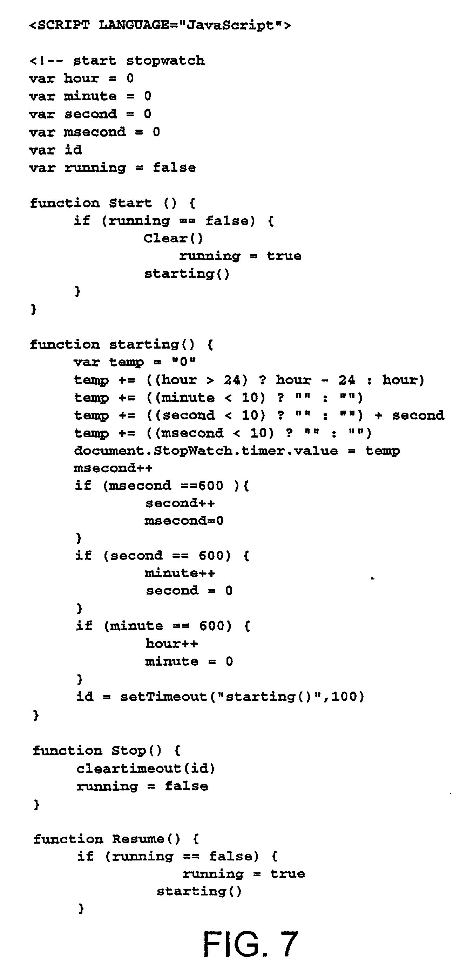

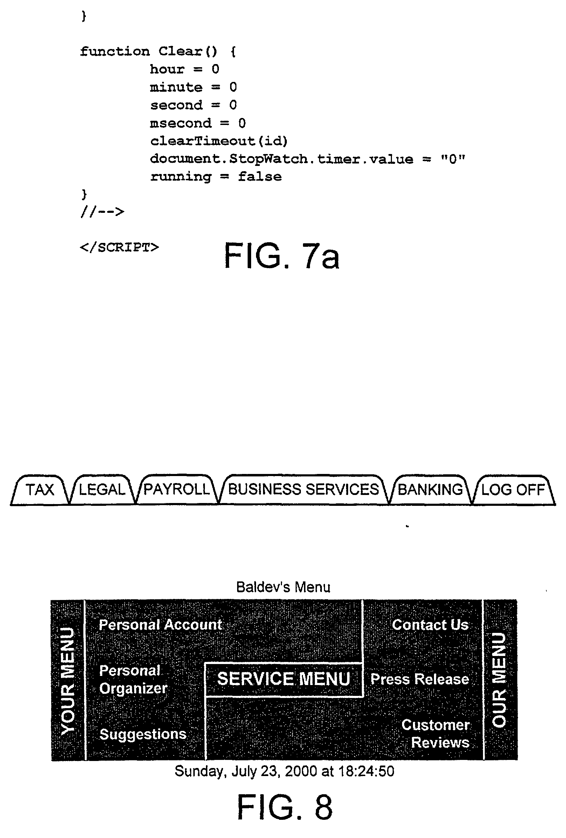

The system as a whole is shown in Figure 6 which adopts the same numbering for similar components as Figures 1, 2 and 3, and shows the operation of the system as a whole for one given user logging on from a terminal 12 for advice information from one given information provision subsystem shown as company Website 16. Associated with the Website 16 is a local timer 14. The customer database 10 stores the user -ID and time allowance data for the given user 12. The overall system is written and tested in Pearl and CGI script specifically for use on the Internet, (an example script for the timer is shown as Figure 7) however the functionality can be replicated in any programming language allowing communication with various media, including interactive television and WAP, technology.

To use the system, a user (hereinafter called a customer) first registers through a customer terminal 12. After registering on the site, a customer selects a service and specific topic area and sends a request message including a textual request and user name in the form of an e-mail 24, to the company Website 16, the customers' personal details are encrypted 20, by relacing the customers' name with the customers' user-ID with the customer database and reads the number of advice minutes the customer currently has. These minutes are then posted next to the customers' incoming e-mail and go to the employee bulletin board.

The e-mail is then posted either on the internal employee bulletin board, 28 or on the external employee bulletin board, 30, if there are more than 250 e-mails sitting on the internal employee bulletin board the software overflows any additional e-mails to the external employee bulletin board.

Whichever employee bulletin board the e-mail resides, the advisor can only see the topic question and the number of active advice minutes that a customer has.

Once an advisor picks the e-mail from the bulletin board it becomes active and a clock begins to function immediately 32. As the advisor spends time answering the question the clock continually ticks. The clock functions on "local time", which operates from the local time of whichever server the Website functionality is running from. As soon as the advisor opens the e-mail the clock begins to count the number of advice minutes it takes for the advisor to answer a particular e-mail. If the advisor needs to go to the washroom, or speak to a colleague there is a, "Pause function", on the screen which will allow the clock to stop, once the advisor returns he or she can then resume the clock functionality.

Once the advisor completes a response message including a textual response and user name in the form of an e-mail and submits it 17, the clock stops and the number of advice minutes used is subtracted from the customers' account in the company database. If the advisor opens an e-mail and cannot answer a customers' e-mail, the advisor can post the question back onto the employee bulletin board, for another consultant to answer 34. If this happens the customers advice minutes are not affected and are re-calibrated to the amount they originally were.

Once an answered e-mail is submitted, the number of advice minutes remaining in a customers' account is compared against the number of minutes just spent by the advisor 36. If the number of advice minutes in a customers account is greater than the number of minutes taken for an advisor to answer the e-mail then the e-mail is sent. Three e-mails are sent simultaneously, one goes to the customers' e-mail account 38, one to the advisor 40, and the third to the management board 42. The advisor cannot access the Management board. The e-mail sent to the customer, has a job reference, which is specific to the advisor who sent the advice. The job reference is unique and can always be used in future communications. The e-mail sent to the Management Inbox board is continually reviewed for total quality management.

If an advisor conducts work on a customers' e-mail and submits it, and it is found that there are insufficient advice minutes 44, then the e-mail is sent to a pending board 48. In addition a note is sent out to the customer informing the customer that they need to top up their advice minutes 38. An e-mail is also sent to the customer service manager so that they can also inform the customer that a top-up is required before the customer' e-mail can be sent 50.

Once a customer tops up their account 52, the database reads the pending board 48, to see if there are any pending e-mails for that customer to be sent out, and if there is the e-mail is sent. If there are multiple e-mails from a customer, in the pending board, then only those e-mails which have enough credit, are sent out. So then the customer must still top-up their account in order to get the other outstanding e-mails back. Successful e-mails, which are sent from the pending board, are sent both to the customer 38, and the management board 42. Again, for total quality control the management always get a copy of an outgoing e-mail from an advisor.

The customer can use myriad business services which have the clock functionality tied to them. This is because it is the same principle each time and the customer database is generic to the business application model. These services are the same if the customer is using any business services pertaining to the United Kingdom.

If our UK customer needs to speak to an advisor in France about business services, there, the exact functionality will apply. The customer will login as a registered user and will go to the French Website portal 52. Once in the French portal the customer can send an e-mail to the French advisors. The same thing will happen, the French advisor will spend the appropriate number of minutes, and a clock will begin, the "local time", for the clock will depend on which server the French company site is using. However this makes no difference to the customer, once the French advisor sends the e-mail to the customer, 2 other e-mails are sent, once is sent to the French management board and the other is sent to the United Kingdom management board. When the French advisor sends the e-mail to the UK customer, the UK customers' account is debited by the appropriate number of advice minutes that the French advisor took in answering the question.

If the UK customers' account did not have enough advice minutes for the French e-mail to be sent, then again the UK customers' e-mail sits in the French pending board. One e-mail is sent to the customer, 2 e-mails are sent to the customers services rep in France and the customer services rep in the UK. In order to alert the UK customer to top-up their UK account by the appropriate number of advice minutes.

In addition a customer can view intellectual property data of previous questions asked and will pay the same way as asking an advisor for advice. As soon as the intellectual property database is opened the customer would be billed as a clock would open and remain open until the customer logs off the IP database.

An example user screen is shown as Figure 8. The customer of the company can at any time view their account balance. The account balance will show them the amount of money spent, the number of advice minutes, the payment scheme that they are on and the number of s-points they have accumulated to date. S-points or savings points is a scheme which will give each customer, 1(one), s-point for each minute of service billed. So if a client is billed for 20 minutes of advice time, he or she will also get 20 S-points. The idea is that at the end of the year the customer will get free service/products depending on the number of S-points they have accumulated.

The company will use the same minute-by-minute billing functionality to service its customers who will also use WAP technology, a technology seen imperative to the future of our business model for our customers as well as general hand-held devices such as palm devices.

A significant advantage provided by the embodiment is that a customer can obtain any professional services advice via the Internet from any location in the world and be billed on a minute-by-minute basis. A customer is able to select from 3 different payment schemes when registering, prepayment, monthly and pay as you go. Once the customer decides on which scheme to use the appropriate number of advice minutes is placed into the customers' account after payment is received.

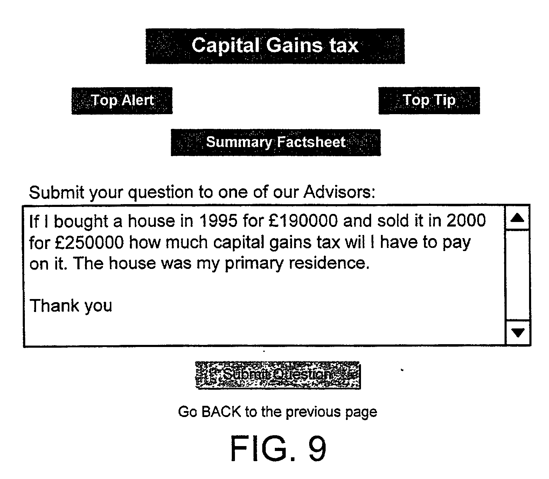

A customer enters the Internet site after having registered and is able to look at several different professional services available, e.g. advice on topics such as tax, legal payroll and business consultancy as shown in Figure 8. The customer chooses a business service and then selects a specific topic and is able to send an e-mail to our advisors with a question or query on that particular topic, an example is shown in Figure 9. Once receiving the e-mail our advisors get back to the customer within 48 hrs or else the company gives notice to the customer if more time is required. The amount of time spent on the e-mail is then billed on a second-by-second basis, the customer receives the advice from the advisor via a return e-mail and the customer's account is debited by the appropriate number of advice minutes.

The personal details of the customer are encrypted (in the sense that the details become anonymous) in the incoming e-mail, so that advisor does not know the customers' personal details, only a customer user-ID number. However when the e-mail is sent back from the advisor to the customer, the details are put back into the e-mail so that the customer's name is shown. The Internet site is designed so that the registered customer can use myriad services and be billed from one platform, this is to provide a seamless integration of products and services conveniently accessible to the customer.

In addition the company uses a central database for all its customers. Hence if a customer in the UK wanted advice from a European advisor, e.g. in France, Germany, Netherlands, etc. the advice time spent by the European advisor is directly debited from the UK customers account in the centrally controlled database. This system therefore eliminates the need of currency exchange billing systems. For billing purposes the clock used to time the advice minutes in the appropriate European country would be based on, "local time", for the server in which that country operates.

Conversely a customer in Europe may want to contact a UK advisor for advice on a particular service, the same thing would happen. The UK advisor would send an answered e-mail to the European customer and the amount of advice minutes would automatically be deducted from the European customer's account.

## Claims

1. A method of monitoring chargeable use by a user of an information provision system having a plurality of distributed information provision subsystems connected by a computer network, comprising:
- maintaining a customer database configured to store user identification data and user time allowance data representing the time allocation allowed by each user;
- receiving a request message from a user at one of the information provision subsystems including a textual request and user identification data;
- displaying the textual request to one or more responders associated with one of the information provision subsystems;
- timing, using a local timer at the information provision subsystem at which the request was displayed, the time taken for the responder to prepare a response;
- generating a response message including a textual response user identification and a time elapsed message indicating the time taken to prepare the response;
- forwarding the user identification and time elapsed message to the customer database; and
- changing the time allowance data to decrement the time allocation for the user by the time taken to prepare the response represented by the time elapsed message.

2. A method according to claim 1, further comprising receiving payment for use of the system in a variety of currencies, and allocating the user time allowance data based on a conversion factor from currency to time.

3. A method according to claim 1 or 2, comprising monitoring the time allowance data and alerting a user if the time allocation indicated by that user falls below a given level.

4. A method according to claim 1, 2 or 3, comprising storing the response message in a pending message store, comparing the time taken to prepare the response, with the time allocation for the user from whom the request was received and, if the time taken to prepare the response is less than the time allocation, sending the textual response to the user.

5. A method according to claim 1, 2 or 3, comprising storing the response message in a pending message store, comparing the time taken to prepare the response with the time allocation for the user from whom the request was received and, if the time taken to prepare the response is more than the time allocation, sending a message to the user to purchase more time allocation.

6. A method according to any preceding claim, further comprising presenting a choice of information topics to each user and, depending upon the topic selected, routing a request message for display to a corresponding subset of the one or more responders.

7. A method according to any preceding claim, further comprising:
- intercepting a request message from a user including a textual request and user identification data;
- retrieving an anonymous user-ID corresponding to the user identification data; and
- forwarding the request message with the textual request and anonymous user-ID.

8. A method according to claim 7, the step of generating a response comprising retrieving the user identification data corresponding to the anonymous user-ID for inclusion in the response message.

9. A method according to any preceding claim, the step of maintaining a customer database comprising maintaining a plurality of local customer databases and a central customer database configured to store user identification data and time allowance data, the step of decrementing time allocation comprising decrementing the central customer database and sending time update messages from the central database to the local databases.

10. A method according to any preceding claim, wherein the user is in a first country, and the responder is in a second country, further comprising receiving payment for use of the system in the currency of the first country, and allocating time allowance data based on a conversion factor from currency to time.

11. A method according to any preceding claim, wherein the request message further includes time allocation data for the user, the step of displaying further including displaying the time allocation of the user to the one or more responders.

12. A system for monitoring chargeable use by a user of an information provision system having a plurality of distributed information provision subsystems connected by a computer network, comprising:
- a customer database configured to store user identification data and user time allowance data representing the time allocation allowed by each user;
- means for receiving a request message from a user at one of the information provision subsystems including a textual request and user identification data;
- means for displaying the textual request to one or more responders associated with one of the information provision subsystems;
- a local timer for timing at the information provision subsystem at which the request was displayed, the time taken for the responder to prepare a response;
- means for generating a response message including a textual response user identification and a time elapsed message indicating the time taken to prepare the response;
- means for forwarding the user identification and time elapsed message to the customer database; and
- means for changing the time allowance data to decrement the time allocation for the user by the time taken to prepare the response represented by the time elapsed message.

13. A system according to claim 12, further comprising means for receiving payment for use of the system in a variety of currencies, and means for allocating the user time allowance data based on a conversion factor from currency to time.

14. A method according to claim 12 or 13, comprising means for monitoring the time allowance data and alerting a user if the time allocation indicated by that user falls below a given level.

15. A system according to claim 12, 13 or 14, comprising a pending message store for storing the response message, means for comparing the time taken to prepare the response, with the time allocation for the user from whom the request was received and, means for sending the textual response to the user if the time taken to prepare the response is less than the time allocation.

16. A system according to claim 12, 13 or 14, comprising a pending message store for storing the response message, means for comparing the time taken to prepare the response with the time allocation for the user from whom the request was received and, means for sending a message to the user to purchase more time allocation if the time taken to prepare the response is more than the time allocation.

17. A system according to any of claims 12 to 16, further comprising means for presenting a choice of information topics to each user and, means for routing a request message for display to a corresponding subset of the one or more responders, depending upon the topic selected.

18. A system according to any of claims 12 to 17, further comprising:
- means for intercepting a request message from a user including a textual request and user identification data;
- means for retrieving an anonymous user-ID corresponding to the user identification data; and
- means for forwarding the request message with the textual request and anonymous user-ID.

19. A system according to claim 18, comprising means for retrieving the user identification data corresponding to the anonymous user-ID for inclusion in the response message.

20. A system according to any of claims 12 to 19, comprising a plurality of local customer databases and a central customer database configured to store user identification data and time allowance data, the means for decrementing time allocation comprising means for decrementing the central customer database and means for sending time update messages from the central database to the local databases.

21. A system according to any of claims 12 to 20, wherein the user is in a first country, and the responder is in a second country, further comprising means for receiving payment for use of the system in the currency of the first country, and allocating time allowance data based on a conversion factor from currency to time.

22. A system according to any of claims 12 to 21, wherein the request message further includes time allocation data for the user, the means for displaying further including means for displaying the time allocation of the user to the one or more responders.

23. A computer program for monitoring chargeable use by a user of an information provision system having a plurality of distributed information provision subsystems connected by a computer network, comprising program code means for performing the steps of any of claims 1 to 11.
